# EUROPEAN PATENT APPLICATION

(11) **EP 3 416 357 A1**
(43) Date of publication of application: **19.12.2018**
(21) Application number: 16894042.7
(22) Date of filing: 27.05.2016
(51) Int. Cl.: H04M 1/725, H04R 1/22

(54) **TERMINAL AUDIO PARAMETER MANAGEMENT METHOD, APPARATUS AND SYSTEM**

(30) Priority: 15.03.2016 CN 201610147410
(71) Applicant: ZTE Corporation, Shenzhen, Guangdong 518057 (CN)
(72) Inventor: WANG, Xiaofei, Shenzhen Guangdong 518057 (CN); JIANG, Xiao, Shenzhen Guangdong 518057 (CN)
(74) Representative: AWA Sweden AB
(86) International application number: PCT/CN2016/083687
(87) International publication number: WO 2017/156880

(57) **Abstract**

Provided is a terminal audio parameter management method. The method includes that: a terminal transmits an original audio waveform and receives a loudspeaker audio waveform corresponding to the original audio waveform; a terminal audio parameter difference point combination and an environmental audio parameter difference point combination are calculated according to the original audio waveform and the loudspeaker audio waveform; and the terminal selects, according to an application scenario, the terminal audio parameter difference point combination and/or the environmental audio parameter difference point combination to adjust a terminal audio parameter. According to the embodiments of the present invention, a terminal receives a loudspeaker audio waveform by transmitting an audio waveform, makes calculations to obtain a terminal audio parameter difference point combination and an environmental audio parameter difference point combination, and selects, according to an application scenario, a corresponding difference point combination for adjustment and optimization. The above technical solution can reduce the probability of damage to an audio device caused by an improper operation of a user. A flexible solution of adjusting an important terminal audio parameter according to different application environments can also be achieved, thus providing a more novel audio effect adjustment method for the user.

## Description

### Technical Field

The present invention relates, but not limited to, the field of terminal audio applications, and more particularly to a terminal audio parameter management method, apparatus and system.

### Background

The optimization of acoustic performance on a terminal device mainly includes two parts: optimization in a research and development stage and user-controllable post-processing. The optimization in the research and development stage is not open to users, but the effect of this optimization is most obvious. When the terminal design is completed, this optimization space is fixed. The user-controllable post-processing part has limited space for user debugging and can only optimize the processing of an equalizer, the degree of optimization is limited, and both availability and utilization rate are very low.

The acoustic performance optimization scheme of the above terminal either is not open to users, or only involves EQ setting or bass boost and other operations in the post-processing field. For the post-processing optimization mode (EQ setting or bass boost or other operations), a user does not perform adjustment based on the actual acoustic performance, the randomness is great, the probability of sound cracking generated by the optimization effect is very large, and the risk of damage to electro-acoustic devices is greatly increased. Moreover, requirements for the EQ adjustment, the bass and the noise level are different in different playing environments, and it is difficult for users to act appropriately to the situation.

### Summary

The following is a brief introduction for a subject described herein in detail. The brief introduction is not intended to restrict the protection scope of claims.

The embodiments of the present invention provide a terminal audio parameter management method, apparatus and system, which solve the technical problem that an audio effect adjustment requirement of a user cannot be met.

The embodiments of the present invention provide a terminal audio parameter management method, including the operations as follows.

A terminal transmits an original audio waveform and receives a loudspeaker audio waveform corresponding to the original audio waveform.

The terminal calculates a terminal audio parameter difference point combination and an environmental audio parameter difference point combination according to the original audio waveform and the loudspeaker audio waveform.

The terminal selects, according to an application scenario, the terminal audio parameter difference point combination and/or the environmental audio parameter difference point combination to adjust a terminal audio parameter.

Alternatively, the operation that a terminal transmits an original audio waveform and receives a loudspeaker audio waveform corresponding to the original audio waveform includes that: the terminal connects a transmitter and a receiver through a wired interface and/or a wireless interface respectively; and the terminal transmits the original audio waveform through the transmitter, and receives the loudspeaker audio waveform through the receiver.

Alternatively, the terminal includes a first earphone jack and a second earphone jack, and the operation that the terminal connects a transmitter and a receiver through a wired interface respectively includes that: the terminal connects the transmitter through the first earphone jack and connects the receiver through the second earphone jack; and according to user selection or adaptive configuration, the first earphone jack is set as an output device interface, and the second earphone jack is set as an input device interface.

Alternatively, the operation that the terminal selects, according to an application scenario, the terminal audio parameter difference point combination and/or the environmental audio parameter difference point combination to adjust a terminal audio parameter includes the operations as follows.

If the application scenario is a recording application, the environmental audio parameter difference point combination is selected to adjust a terminal audio parameter.

If the application scenario is a voice call application, the terminal audio parameter difference point combination is selected to adjust a terminal audio parameter.

If the application scenario is a multimedia playing application, the terminal audio parameter difference point combination and the environmental audio parameter difference point combination are both selected to adjust the terminal audio parameter.

Alternatively, the method further includes that: a user confirmation operation is received, and the operation is ended if a user accepts an adjusted audio effect; and if the user does not accept the adjusted audio effect, the terminal audio parameter is re-adjusted until the user accepts the adjusted audio effect.

Alternatively, the operation that the terminal calculates a terminal audio parameter difference point combination and an environmental audio parameter difference point combination according to the original audio waveform and the loudspeaker audio waveform includes the operations as follows.

The terminal acquires a derived audio waveform and an environmental reflection audio waveform according to the loudspeaker audio waveform, acquires an initial acoustic characteristic index group according to the original audio waveform, acquires a terminal acoustic characteristic index group according to the derived audio waveform, and acquires an environmental acoustic characteristic index group according to the environmental reflection audio waveform.

The terminal audio parameter difference point combination is calculated according to the initial acoustic characteristic index group and the terminal acoustic characteristic index group, and the environmental audio parameter difference point combination is calculated according to the initial acoustic characteristic index group and the environmental acoustic characteristic index group.

Alternatively, the terminal audio parameter difference point combination includes at least one of a terminal noise output level, a frequency response curve, and an environmental sound pressure characteristic parameter; and the environmental audio parameter difference point combination includes at least one of a terminal noise output level, a frequency response curve, and an environmental sound pressure characteristic parameter.

The operation of adjusting a terminal audio parameter includes one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

Alternatively, the operation that the terminal acquires a derived audio waveform and an environmental reflection audio waveform according to the loudspeaker audio waveform includes the operations as follows.

The loudspeaker audio waveform is echo-suppressed, and an echo signal of the loudspeaker audio waveform is canceled to obtain the derived audio waveform; and environmental sound field data is acquired from the echo signal to obtain the environmental reflection audio waveform. The embodiments of the present invention provide a terminal audio parameter management apparatus, including:
an audio module, arranged to transmit an original audio waveform and receive a loudspeaker audio waveform corresponding to the original audio waveform;
a processing module, arranged to calculate a terminal audio parameter difference point combination and an environmental audio parameter difference point combination according to the original audio waveform and the loudspeaker audio waveform; and
an adjustment module, arranged to select, according to an application scenario, the terminal audio parameter difference point combination and/or the environmental audio parameter difference point combination to adjust a terminal audio parameter.

Alternatively, the audio module is arranged to connect a transmitter and a receiver through a wired interface and/or a wireless interface respectively, transmit the original audio waveform through the transmitter, and receive the loudspeaker audio waveform through the receiver.

Alternatively, the audio module includes a first earphone jack and a second earphone jack, and the audio module connects a transmitter and a receiver through a wired interface respectively in the following manners: connecting the transmitter through the first earphone jack, connecting the receiver through the second earphone jack, setting, according to user selection or adaptive configuration, the first earphone jack as an output device interface, and setting the second earphone jack as an input device interface.

Alternatively, the adjustment module is arranged to:
select, if the application scenario is a recording application, the environmental audio parameter difference point combination to adjust a terminal audio parameter;
select, if the application scenario is a voice call application, the terminal audio parameter difference point combination to adjust a terminal audio parameter; and
select, if the application scenario is a multimedia playing application, both the terminal audio parameter difference point combination and the environmental audio parameter difference point combination to adjust the terminal audio parameter.

Alternatively, the adjustment module is further arranged to: receive a user confirmation operation, and end the operation if a user accepts an adjusted audio effect; and re-adjust, if the user does not accept the adjusted audio effect, the terminal audio parameter until the user accepts the adjusted audio effect.

Alternatively, the processing module is arranged to:
acquire a derived audio waveform and an environmental reflection audio waveform according to the loudspeaker audio waveform, acquire an initial acoustic characteristic index group according to the original audio waveform, acquire a terminal acoustic characteristic index group according to the derived audio waveform,
acquire an environmental acoustic characteristic index group according to the environmental reflection audio waveform, calculate the terminal audio parameter difference point combination according to the initial acoustic characteristic index group and the terminal acoustic characteristic index group, and calculate the environmental audio parameter difference point combination according to the initial acoustic characteristic index group and the environmental acoustic characteristic index group.

Alternatively, the terminal audio parameter difference point combination includes at least one of a terminal noise output level, a frequency response curve, and an environmental sound pressure characteristic parameter; and the environmental audio parameter difference point combination includes at least one of a terminal noise output level, a frequency response curve, and an environmental sound pressure characteristic parameter.

The adjustment module adjusts a terminal audio parameter in one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

Alternatively, the processing module acquires a derived audio waveform and an environmental reflection audio waveform according to the loudspeaker audio waveform in the following manners:
performing echo suppression on the loudspeaker audio waveform, and canceling an echo signal of the loudspeaker audio waveform to obtain the derived audio waveform; and performing environmental sound field data acquisition on the echo signal to obtain the environmental reflection audio waveform.

The embodiments of the present invention provide a terminal audio parameter management system, including a terminal, a transmitter and a receiver, the terminal being provided with the terminal audio parameter management apparatus provided in the embodiments of the present invention.

The embodiments of the present invention also provide a computer-readable storage medium. A computer-executable instruction is stored in the computer-readable storage medium. The computer-executable instruction is executed to implement the terminal audio parameter management method.

The embodiments of the present invention have the beneficial effects as follows.

The embodiments of the present invention provide a terminal audio parameter management method. A terminal receives a loudspeaker audio waveform by transmitting an audio waveform, makes calculations to obtain a terminal audio parameter difference point combination and an environmental audio parameter difference point combination, and selects, according to an application scenario, a corresponding difference point combination for adjustment and optimization. The above technical solution can reduce the probability of damage to an audio device caused by an improper operation of a user. A flexible solution of adjusting an important terminal audio parameter according to different application environments can also be achieved, thus providing a more novel audio effect adjustment method for the user, and solving the technical problem that a terminal cannot meet an audio effect adjustment requirement of a user. Furthermore, an extensible peripheral interface may be set more flexibly, which is most convenient for users. After the drawings and the detailed descriptions are read and understood, other aspects may be understood.

### Brief Description of Drawings

FIG. 1 is a structural schematic diagram of a terminal audio parameter management apparatus in a first embodiment of the present invention.
FIG. 2 is a flowchart of a terminal audio parameter management method in a second embodiment of the present invention.
FIG. 3 is a flowchart of a terminal audio parameter management method in a third embodiment of the present invention.
FIG. 4 is a schematic diagram of a dual earphone jack terminal in a third embodiment of the present invention.
FIG. 5 is a schematic diagram of a terminal controlling dual earphone jacks in a third embodiment of the present invention.
FIG. 6 is a schematic diagram of acoustic characteristic measurement in a third embodiment of the present invention.

### Detailed Description

The present application is further illustrated by the embodiments in conjunction with the accompanying drawings.

### First embodiment:

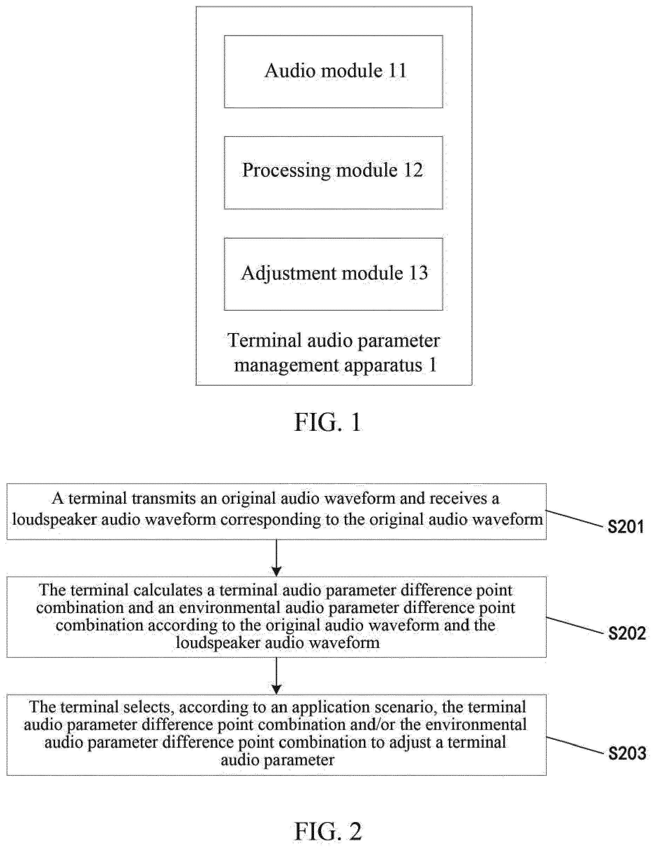

FIG. 1 is a structural schematic diagram of a terminal audio parameter management apparatus in a first embodiment of the present invention. From FIG. 1, it can be seen that in the present embodiment, a terminal audio parameter management apparatus 1 provided in the embodiment of the present invention includes:
an audio module 11, arranged to transmit an original audio waveform and receive a loudspeaker audio waveform corresponding to the original audio waveform;
a processing module 12, arranged to calculate a terminal audio parameter difference point combination and an environmental audio parameter difference point combination according to the original audio waveform and the loudspeaker audio waveform; and
an adjustment module 13, arranged to select, according to an application scenario, the terminal audio parameter difference point combination and/or the environmental audio parameter difference point combination to adjust a terminal audio parameter.

Alternatively, the audio module 11 in the above embodiment is arranged to connect a transmitter and a receiver through a wired interface and/or a wireless interface respectively, transmit the original audio waveform through the transmitter, and receive the loudspeaker audio waveform through the receiver.

Alternatively, the audio module 11 in the above embodiment includes a first earphone jack and a second earphone jack, and the audio module connects a transmitter and a receiver through a wired interface respectively in the following manners: connecting the transmitter through the first earphone jack, connecting the receiver through the second earphone jack, setting, according to user selection or adaptive configuration, the first earphone jack as an output device interface, and setting the second earphone jack as an input device interface.

Alternatively, the adjustment module 13 in the above embodiment is arranged to:
select, if the application scenario is a recording application, the environmental audio parameter difference point combination to adjust a terminal audio parameter;
select, if the application scenario is a voice call application, the terminal audio parameter difference point combination to adjust a terminal audio parameter; and
select, if the application scenario is a multimedia playing application, both the terminal audio parameter difference point combination and the environmental audio parameter difference point combination to adjust the terminal audio parameter.

Alternatively, the adjustment module 13 in the above embodiment is further arranged to: receive a user confirmation operation, and end the operation if a user accepts an adjusted audio effect; and re-adjust, if the user does not accept the adjusted audio effect, the terminal audio parameter until the user accepts the adjusted audio effect.

Alternatively, the processing module 12 in the above embodiment is arranged to:
acquire a derived audio waveform and an environmental reflection audio waveform according to the loudspeaker audio waveform, acquire an initial acoustic characteristic index group according to the original audio waveform, acquire a terminal acoustic characteristic index group according to the derived audio waveform,
acquire an environmental acoustic characteristic index group according to the environmental reflection audio waveform, calculate the terminal audio parameter difference point combination according to the initial acoustic characteristic index group and the terminal acoustic characteristic index group, and calculate the environmental audio parameter difference point combination according to the initial acoustic characteristic index group and the environmental acoustic characteristic index group.

Alternatively, the terminal audio parameter difference point combination in the above embodiment includes at least one of a terminal noise output level, a frequency response curve, and an environmental sound pressure characteristic parameter; and the environmental audio parameter difference point combination includes at least one of a terminal noise output level, a frequency response curve, and an environmental sound pressure characteristic parameter. The adjustment module 13 adjusts a terminal audio parameter in one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

Alternatively, the processing module 12 acquires a derived audio waveform and an environmental reflection audio waveform according to the loudspeaker audio waveform in the following manners:
performing echo suppression on the loudspeaker audio waveform, and canceling an echo signal of the loudspeaker audio waveform to obtain the derived audio waveform; and performing environmental sound field data acqusition on the echo signal to obtain the environmental reflection audio waveform.

The embodiments of the present invention provide a terminal audio parameter management system, including a terminal, a transmitter and a receiver, wherein the terminal is provided with the terminal audio parameter management apparatus provided in the embodiments of the present invention.

### Second embodiment:

FIG. 2 is a flowchart of a terminal audio parameter management method in a second embodiment of the present invention. From FIG. 2, it can be seen that in the present embodiment, a terminal audio parameter management method provided in the embodiment of the present invention includes the steps as follows.

In step S201, a terminal transmits an original audio waveform and receives a loudspeaker audio waveform corresponding to the original audio waveform.

In step S202, the terminal calculates a terminal audio parameter difference point combination and an environmental audio parameter difference point combination according to the original audio waveform and the loudspeaker audio waveform.

In step S203, the terminal selects, according to an application scenario, the terminal audio parameter difference point combination and/or the environmental audio parameter difference point combination to adjust a terminal audio parameter.

Alternatively, the operation that a terminal transmits an original audio waveform and receives a loudspeaker audio waveform corresponding to the original audio waveform in the above embodiment includes that: the terminal connects a transmitter and a receiver through a wired interface and/or a wireless interface respectively; and the terminal transmits the original audio waveform through the transmitter, and receives the loudspeaker audio waveform through the receiver.

Alternatively, the terminal in the above embodiment includes a first earphone jack and a second earphone jack, and the operation that the terminal connects a transmitter and a receiver through a wired interface respectively includes that: the terminal connects the transmitter through the first earphone jack and connects the receiver through the second earphone jack; and according to user selection or adaptive configuration, the first earphone jack is set as an output device interface, and the second earphone jack is set as an input device interface.

Alternatively, the operation that the terminal selects, according to an application scenario, the terminal audio parameter difference point combination and/or the environmental audio parameter difference point combination to adjust a terminal audio parameter in the above embodiment includes the operations as follows.

If the application scenario is a recording application, the environmental audio parameter difference point combination is selected to adjust a terminal audio parameter.

If the application scenario is a voice call application, the terminal audio parameter difference point combination is selected to adjust a terminal audio parameter.

If the application scenario is a multimedia playing application, both the terminal audio parameter difference point combination and the environmental audio parameter difference point combination are selected to adjust the terminal audio parameter.

Alternatively, the method in the above embodiment further includes the steps as follows. A user confirmation operation is received, if a user accepts an adjusted audio effect, the operation is ended, and if the user does not accept the adjusted audio effect, the terminal audio parameter is re-adjusted until the user accepts the adjusted audio effect.

Alternatively, the operation that the terminal calculates a terminal audio parameter difference point combination and an environmental audio parameter difference point combination according to the original audio waveform and the loudspeaker audio waveform in the above embodiment includes the operations as follows.

The terminal acquires a derived audio waveform and an environmental reflection audio waveform according to the loudspeaker audio waveform, acquires an initial acoustic characteristic index group according to the original audio waveform, acquires a terminal acoustic characteristic index group according to the derived audio waveform, acquires an environmental acoustic characteristic index group according to the environmental reflection audio waveform, calculates the terminal audio parameter difference point combination according to the initial acoustic characteristic index group and the terminal acoustic characteristic index group, and calculates the environmental audio parameter difference point combination according to the initial acoustic characteristic index group and the environmental acoustic characteristic index group.

Alternatively, the terminal audio parameter difference point combination in the above embodiment includes at least one of a terminal noise output level, a frequency response curve, and an environmental sound pressure characteristic parameter; and the environmental audio parameter difference point combination includes at least one of a terminal noise output level, a frequency response curve, and an environmental sound pressure characteristic parameter. The operation of adjusting a terminal audio parameter includes one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

Alternatively, the operation that the terminal acquires a derived audio waveform and an environmental reflection audio waveform according to the loudspeaker audio waveform includes the operations as follows.

The loudspeaker audio waveform is echo-suppressed, and an echo signal of the loudspeaker audio waveform is canceled to obtain the derived audio waveform; and environmental sound field data is acquired from the echo signal to obtain the environmental reflection audio waveform.

### Third embodiment:

The technical solutions of the embodiments of the present invention are further explained below with reference to specific application scenarios.

The requirements for sound effects of intelligent terminals are getting higher and higher, and it is required to improve the listening experience of users as much as possible in both a voice call scenario and a multimedia playing scenario. At present, it is necessary to use more excellent electro-acoustic conversion devices, integrate a more complex audio post-processing algorithm in the multimedia playing scenario, and use a voice optimization algorithm in the voice call scenario. These post-processing algorithms and voice optimization algorithms may provide dedicated functions (AVE) such as noise suppression (NS), sound effect enhancement (AAE), echo cancellation (EC), and voice enhancement. The addition of these technologies optimizes the audio effect of a terminal and improves the user experience.

At present, a function adjustment algorithm module of an audio optimization algorithm adopted by a mobile terminal includes: echo cancellation/noise suppression, Dynamic Range Control (DRC), and filter Finite Impulse Response (FIR)/Infinite Impulse Response (IIR)/high-pass filtering. An audio post-processing algorithm used in the multimedia playing scenario includes: quantization equalization (EQ), spectrum-based sound effect enhancement (bass boost), virtual surround function (time-delay characteristic adjustment based on two-channel sound signal time axis) and so on. These algorithms may change the frequency and energy characteristics of an original sound source signal to provide more comfortable music performance and call performance meeting the requirements of consumers.

Related voice optimization algorithms are all concentrated in a terminal research and development stage. They are all professionally tested and adjusted by research personnel according to the acoustic characteristics, and there is not any operable space for users. Multimedia sound post-processing adjustment provides a user with a small adjustable range and has the risk of breaking the sound, which has great damage to an electro-acoustic device; and with the increase of the use frequency of the electro-acoustic device, the audio characteristics will change, and in different application environments, the sound effects of a terminal electro-acoustic device are also different.

Therefore, it is necessary to fine adjust audio parameters to provide a better user experience. The optimization of the research and development stage is divided into two parts: 1, call-type voice optimization; and 2, multimedia-type recording and playing performance optimization. The optimization measures in Part 1 are invisible to the user, so the parameters of this part cannot be updated in a terminal application process, and the optimization of the call performance is also constant. Sometimes, the performance of audio components of the terminal fluctuates due to aging. Not only the optimization effect cannot be achieved, but also the defects in the sound are even highlighted. The optimization of the HD recording part in Part 2 is similar to Part 1 and is invisible to the user. In Part 2, the multimedia playing is often the application scene that the user cares most about the sound effect. The user may adjust the sound effect through EQ adjustment or bass enhancement functions in a post-processing function, or perform some effect enhancement to achieve the desired playing effect.

The acoustic performance optimization scheme of the above terminal either is not open to users, or only involves EQ setting or bass boost in the post-processing field. For the post-processing optimization mode (EQ setting or bass boost), a user does not perform adjustment based on the actual acoustic performance, the randomness is great, the probability of sound cracking generated by the optimization effect is very large, and the risk of damage to electro-acoustic devices is greatly increased. Moreover, requirements for the EQ adjustment, the bass requirement and the noise level are different in different playing environments, and it is difficult for users to act appropriately to the situation. This phenomenon of fluctuations in sound quality due to different application environments and fluctuations in the acoustic performance of electro-acoustic devices may be fully compensated by fine adjusting the acoustic parameters. However, due to the complexity of the non-professional and optimization algorithm parameter adjustment of users, an ordinary user cannot get the parameter adjustment authority, resulting in instability of the terminal sound effect and even quality problems.

The embodiment of the present invention utilizes an extensible peripheral interface of a terminal to connect an acoustic transmitting and receiving apparatus, cooperates with internal acoustic analysis software of the terminal, detects the inherent acoustic characteristics of the terminal, or detects the acoustic characteristics of the "terminal + playing environment". According to the optimized hearing sense standard, an automatically optimized modification scheme is fed back to the terminal, which is convenient for a user to select an optimization scheme according to a specific use environment and listening preferences, and the audio parameters of a terminal system is modified after verifying the optimization effect to achieve the optimization of the sense of hearing.

The user selection optimization scheme involved in the embodiment of the present invention mainly refers to the following three steps: a user starts the process of adaptively modifying audio parameters, and selects the acoustics performance measurement of both a "terminal" and/or a "playing environment" according to actual usage situations; when an application program feeds back an optimization scheme for both the "terminal" and the "playing environment" to the terminal for display, the user is prompted to confirm the modified content; and the system will load the optimization solution confirmed by the user onto the terminal, and run the user-selected operation again to prompt the user to confirm the optimized sound effect, if the expectation of the user is met, the optimization scheme is modified, and otherwise, the steps of the detection and recommendation optimization scheme are repeated until the user is satisfied.

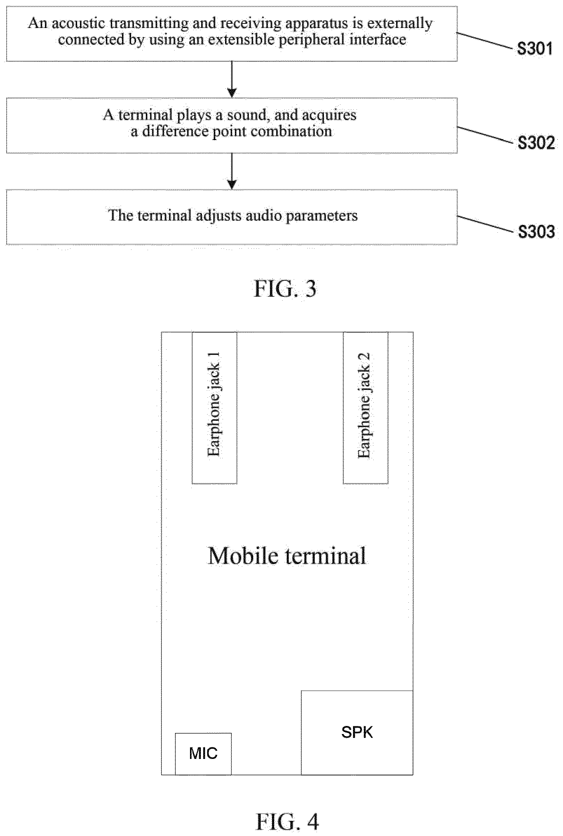

As shown in FIG. 3, the terminal audio parameter management method provided in the embodiments of the present invention includes the operations as follows.

In step S301, a terminal externally connects an acoustic transmitting and receiving apparatus by using an extensible peripheral interface.

The extensible peripheral interface involved in the embodiment of the present invention refers to a signal channel interface for data exchange between an acoustic transmitting device and a terminal that must be provided for completing acoustic detection, and a signal channel interface for data exchange between the acoustic receiving device and the terminal. The signal channel interface of the two data exchanges may be a new type of terminal device with two earphone jacks (as shown in FIG. 4); it may also be used with a wired interface of a conventional terminal (including but not limited to earphone jack + Universal Serial Bus (USB) interface); it may also use a wired interface of a general terminal (including but not limited to an earphone interface) with the scheme of the acoustic device that communicates using a wireless transmission interface, or both data interfaces use the wireless channel interface to complete necessary acoustic transmission and receiving.

External device: this device requires an output device and a receiving device according to the general principle of acoustic detection. The terminal provides a professional detection waveform through a transmitting device, and returns to a receiving device again after going through the action of the acoustic effect of the environment, and the receiving device obtains the measured waveform after going through the environmental action.

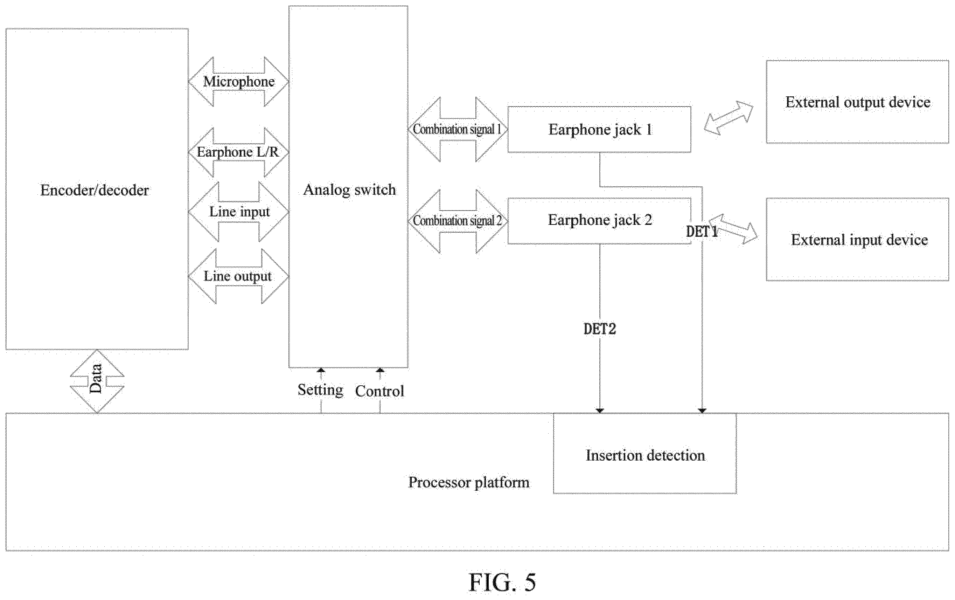

Mobile terminal side interface: a mobile terminal side hardware interface requirement, that is, an extensible peripheral interface is a new type of terminal device with two earphone jacks. The novel terminal of the present embodiment adds a set of 4-segment earphone jacks and a set of analog switch channels (as shown in FIG. 5), and switches between each set of dedicated signals, control signals are output by a processor platform, and there are two control sources: one source is a choice made by the user after receiving a system prompt, and the other source is an adaptive insertion detection mechanism provided by the terminal.

Novel terminal side analog switch function: on the basis of the original 4-segment earphone jack 1, a further 4-segment earphone jack 2 is added, which doubles the signal channel and provides conditions for connecting external devices. The core of this design is that the added earphone jack is fully compatible with the original earphone jack function, which is achieved by analog switches and detection signals (DET1&DET2). FIG. 5 is a mechanism block diagram of supporting signal switching in a terminal. When an external output/input device is inserted into an earphone jack, the processor platform performs adaptive identification through the DET1&DET2 signals, and the processor platform controls the analog switch to perform signal channel switching; or after the error is reported, an upper layer application program is fed back, the user selects through the application program, and the processor platform re-configures the analog switch to complete the signal switching. When the external device is connected to the earphone jack 1 and the earphone jack 2, it may be designated by the user or adaptively selected as an output/input device interface, and switching is completed by the control signal of the analog switch.

In S302, the terminal plays a sound, and acquires a difference point combination.

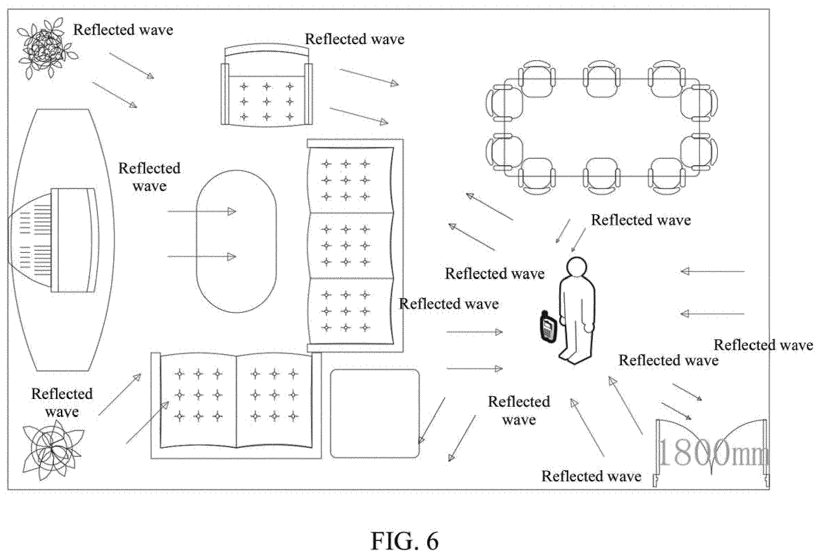

In the scenario shown in FIG. 6, the embodiment of the present invention measures the acoustic characteristics of a physical environment where the terminal is located, according to the principle of acoustic detection, by externally connecting a detection transmitter and a receiver to a special terminal device, and performs analysis by means of the terminal processing power to obtain the following information: "terminal + environment" frequency response curve (FR), terminal noise output level and sound pressure characteristics (SPL). The acoustic performances involved in the embodiments of the present invention mainly refer to, but are not limited to, a frequency response curve (FR), a noise output level and a sound pressure characteristic (SPL).

In the present embodiment, the acoustic characteristic analysis steps and principles include: the detection transmitter of the terminal transmits an original audio waveform Wi, and the receiver receives a loudspeaker audio waveform W', and the terminal performs echo suppression on W', and cancels an echo signal We' included in W' to obtain clean derived audio waveform data W; environmental sound field data is acquired for the echo signal We' to obtain a final environmental reflection audio waveform We, that is, an environmental signal; acoustic analysis is performed on W to obtain a terminal acoustic characteristic index group X (including but not limited to: an FR curve, an SPL, a noise level, etc.); acoustic analysis is performed on the We signal to obtain an environmental acoustic characteristic index group Y; the Wi signal is analyzed to obtain an initial acoustic characteristic index group Z; Y and Z are compared to find an environmental audio parameter difference point combination α of the index; and X and Z are compared to find a terminal audio parameter difference point combination β of the index.

In S303, the terminal adjusts audio parameters.

The technical solution of the embodiment of the present invention not only optimizes the voice call effect of a terminal, but also optimizes the sound quality of multimedia playing and recording of the terminal. The optimization for the voice call effect of the terminal mainly refers to the acoustic performance of the "terminal" itself, and the optimization for the sound quality of multimedia playing and recording of the terminal requires the comprehensive consideration of the acoustic performance of the "terminal" itself and the acoustic performance of a "playing environment".

In the present embodiment, the frequency response curve (FR) of the "terminal + environment" is used to compensate filter parameters in application scenarios such as playing, recording or calling, that is, the parameter adjustment of a parameter filter for the measured FR curve recess includes but is not limited to: modifying a gain value for a recess depth, setting a cutoff frequency point (Fh) according to the recess position, and setting a Q value (quality factor) according to the recess bandwidth; and finally, the filter is used to compensate the recess on the FR curve.

A noise suppression parameter in call audio parameters is modified by using the measured value of the terminal noise output level, including but not limited to: a threshold value of noise detection and various parameters of a noise filter.

The environmental sound pressure characteristics (SPL) obtained by the detector describe a final loudness indication measurement value obtained by environmental reflection and reverberation after the terminal sends a certain detection sound source, and a power amplifier Analog-gain parameter is modified or a Digital-gain in an audio signal digital channel is modified according to the requirements of the actual human ear on the loudness. It is foreseen that the optimization of the audio parameters involved in the embodiments of the present invention includes, but is not limited to, these several acoustic performances. Furthermore, according to an acoustic detection technology, the embodiment of the present invention distinguishes the influences of the "terminal" and the "environment" on the above acoustic performance, respectively obtains corresponding parameter optimization schemes, and then decides whether to use two parameter optimization schemes separately or jointly according to the choice of the user.

According to different user scenarios, difference point combinations are selected, including: multimedia playing adopts difference point combination α + difference point combination β, a recording application adopts a difference point combination α, and a voice call adopts a difference point combination β; according to the selected difference point combination, audio parameters (including but not limited to the following parameters: a gain value of a parameter filter, an Fh cutoff frequency point and a Q value quality factor, as well as a Voice Activity Detection (VAD) parameter and various levels of Analog-gain and Digital-gain in a noise suppression algorithm module) are adaptively adjusted to complete sound optimization. The operation includes: optimization of a VAD threshold parameter in a noise suppression algorithm according to the noise level in each difference point combination. When the Noise-Level value is increased, the VAD threshold needs to be raised, which may better suppress the noise and also lose more useful signals, so the magnitude of the improvement is empirically selected. In order to obtain FR curve information, a professional analysis algorithm intercepts Wi, W and We waveforms according to a conventional gate function (alternatively including but not limited to a Hamming window function), separately performs Fourier transform to obtain the corresponding FR curve information, then performs comparison to obtain an FR curve difference in the difference point combination, configures a voice optimization algorithm or the gain value, the Fh cutoff frequency point and the Q value quality factor of the parameter filter in the multimedia sound post-processing algorithm, and adjusts the FR curve trend of W' to be as close as possible to the FR curve trend of the Wo waveform, thereby ensuring that the FR curve amplitude difference is less than 3dBSPL over the entire acoustic band (within 8 kHz for calling, and within 16 kHz for multimedia playing). According to the SPL in various difference point combinations, each gain in the audio path is properly adjusted, including Analog-Gain and Digital-Gain.

In summary, the embodiments of the present invention at least have the beneficial effects as follows.

The embodiments of the present invention provide a terminal audio parameter management method. A terminal receives a loudspeaker audio waveform by transmitting an audio waveform, makes calculations to obtain a terminal audio parameter difference point combination and an environmental audio parameter difference point combination, and selects, according to an application scenario, a corresponding difference point combination for adjustment and optimization of terminal audio parameter. The above technical solution can reduce the probability of damage to an audio device caused by an improper operation of a user. A flexible solution of adjusting an important terminal audio parameter according to different application environments can also be achieved, thus providing a more novel audio effect adjustment method for the user, and solving the technical problem that a terminal cannot meet an audio effect adjustment requirement of a user. Furthermore, an extensible peripheral interface is set more flexibly, which is most convenient for users.

The embodiments of the present invention also provide a computer-readable storage medium. A computer-executable instruction is stored in the computer-readable storage medium. The computer-executable instruction is executed to implement the terminal audio parameter management method.

Those of ordinary skill in the art may understand that all or some steps in the above method may be completed by instructing relevant hardware (such as a processor) via a program, and the program may be stored in a computer-readable storage medium such as a read-only memory, a magnetic disk or an optical disc. Alternatively, all or some steps in the above embodiments may also be implemented by using one or more integrated circuits. Correspondingly, each module/unit in the above embodiments may be implemented in the form of hardware, for example, the corresponding function is implemented by an integrated circuit. Or, various modules/units may be implemented in the form of a software function module, for example, the corresponding function is implemented by executing a program/instruction stored in a memory through a processor. The present application is not limited to any specific combination of hardware and software. Those of ordinary skill in the art should understand that the technical solutions of the present application may be modified or equivalently replaced without departing from the spirit and scope of the technical solutions of the present application, and should be included in the scope of the claims of the present application.

### Industrial Applicability

The above technical solution reduces the probability of damage to an audio device caused by an improper operation of a user. A flexible solution of adjusting an important terminal audio parameter according to different application environments can also be achieved, thus providing a more novel audio effect adjustment method for the user, and improving the use experience of a user.

## Claims

1. A terminal audio parameter management method, comprising:
transmitting, by a terminal, an original audio waveform, and receiving a loudspeaker audio waveform corresponding to the original audio waveform;
calculating, by the terminal, a terminal audio parameter difference point combination and an environmental audio parameter difference point combination according to the original audio waveform and the loudspeaker audio waveform; and
selecting, by the terminal, the terminal audio parameter difference point combination and/or the environmental audio parameter difference point combination according to an application scenario to adjust a terminal audio parameter.

2. The terminal audio parameter management method according to claim 1, wherein the step of transmitting, by a terminal, an original audio waveform and receiving a loudspeaker audio waveform corresponding to the original audio waveform comprises: connecting, by the terminal, a transmitter and a receiver through a wired interface and/or a wireless interface respectively; and transmitting, by the terminal, the original audio waveform through the transmitter, and receiving the loudspeaker audio waveform through the receiver.

3. The terminal audio parameter management method according to claim 2, wherein the terminal comprises a first earphone jack and a second earphone jack, and connecting, by the terminal, a transmitter and a receiver through a wired interface and/or a wireless interface respectively comprises: connecting, by the terminal, the transmitter through the first earphone jack and connecting the receiver through the second earphone jack; and setting, according to user selection or adaptive configuration, the first earphone jack as an output device interface, and setting the second earphone jack as an input device interface.

4. The terminal audio parameter management method according to claim 1, wherein selecting, by the terminal, the terminal audio parameter difference point combination and/or the environmental audio parameter difference point combination according to an application scenario to adjust a terminal audio parameter comprises:
selecting, if the application scenario is a recording application, the environmental audio parameter difference point combination to adjust the terminal audio parameter;
selecting, if the application scenario is a voice call application, the terminal audio parameter difference point combination to adjust the terminal audio parameter; and
selecting, if the application scenario is a multimedia playing application, both the terminal audio parameter difference point combination and the environmental audio parameter difference point combination to adjust the terminal audio parameter.

5. The terminal audio parameter management method according to claim 1, further comprising: receiving a user confirmation operation, and ending the operation if a user accepts an adjusted audio effect; and if the user does not accept the adjusted audio effect, re-adjusting the terminal audio parameter until the user accepts the adjusted audio effect.

6. The terminal audio parameter management method according to any one of claims 1 to 5, wherein calculating, by the terminal, a terminal audio parameter difference point combination and an environmental audio parameter difference point combination according to the original audio waveform and the loudspeaker audio waveform comprises:
acquiring, by the terminal, a derived audio waveform and an environmental reflection audio waveform according to the loudspeaker audio waveform, acquiring an initial acoustic characteristic index group according to the original audio waveform, acquiring a terminal acoustic characteristic index group according to the derived audio waveform, and acquiring an environmental acoustic characteristic index group according to the environmental reflection audio waveform; and
calculating the terminal audio parameter difference point combination according to the initial acoustic characteristic index group and the terminal acoustic characteristic index group, and calculating the environmental audio parameter difference point combination according to the initial acoustic characteristic index group and the environmental acoustic characteristic index group.

7. The terminal audio parameter management method according to claim 6, wherein the terminal audio parameter difference point combination comprises at least one of a terminal noise output level, a frequency response curve, and an environmental sound pressure characteristic parameter, and the environmental audio parameter difference point combination comprises at least one of a terminal noise output level, a frequency response curve, and an environmental sound pressure characteristic parameter;
adjusting a terminal audio parameter comprises one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

8. The terminal audio parameter management method according to claim 6, wherein acquiring, by the terminal, a derived audio waveform and an environmental reflection audio waveform according to the loudspeaker audio waveform comprises:
performing echo suppression on the loudspeaker audio waveform, and canceling an echo signal of the loudspeaker audio waveform to obtain the derived audio waveform; and performing environmental sound field data acquisition on the echo signal to obtain the environmental reflection audio waveform.

9. A terminal audio parameter management apparatus, comprising:
an audio module, arranged to transmit an original audio waveform and receive a loudspeaker audio waveform corresponding to the original audio waveform;
a processing module, arranged to calculate a terminal audio parameter difference point combination and an environmental audio parameter difference point combination according to the original audio waveform and the loudspeaker audio waveform; and
an adjustment module, arranged to select, according to an application scenario, the terminal audio parameter difference point combination and/or the environmental audio parameter difference point combination to adjust a terminal audio parameter.

10. The terminal audio parameter management apparatus according to claim 9, wherein the audio module is arranged to connect a transmitter and a receiver through a wired interface and/or a wireless interface respectively, transmit the original audio waveform through the transmitter, and receive the loudspeaker audio waveform through the receiver.

11. The terminal audio parameter management apparatus according to claim 10, wherein the audio module comprises a first earphone jack and a second earphone jack, and the audio module connects a transmitter and a receiver through a wired interface respectively in the following manners: connecting the transmitter through the first earphone jack, connecting the receiver through the second earphone jack, setting, according to user selection or adaptive configuration, the first earphone jack as an output device interface, and setting the second earphone jack as an input device interface.

12. The terminal audio parameter management apparatus according to claim 9, wherein the adjustment module is arranged to:
select, if the application scenario is a recording application, the environmental audio parameter difference point combination to adjust a terminal audio parameter;
select, if the application scenario is a voice call application, the terminal audio parameter difference point combination to adjust a terminal audio parameter; and
select, if the application scenario is a multimedia playing application, both the terminal audio parameter difference point combination and the environmental audio parameter difference point combination to adjust the terminal audio parameter.

13. The terminal audio parameter management apparatus according to claim 9, wherein the adjustment module is further arranged to: receive a user confirmation operation, and end the operation if a user accepts an adjusted audio effect; and re-adjust, if the user does not accept the adjusted audio effect, the terminal audio parameter until the user accepts the adjusted audio effect.

14. The terminal audio parameter management apparatus according to any one of claims 9 to 13, wherein the processing module is arranged to:
acquire a derived audio waveform and an environmental reflection audio waveform according to the loudspeaker audio waveform, acquire an initial acoustic characteristic index group according to the original audio waveform, acquire a terminal acoustic characteristic index group according to the derived audio waveform,
acquire an environmental acoustic characteristic index group according to the environmental reflection audio waveform, calculate the terminal audio parameter difference point combination according to the initial acoustic characteristic index group and the terminal acoustic characteristic index group, and calculate the environmental audio parameter difference point combination according to the initial acoustic characteristic index group and the environmental acoustic characteristic index group.

15. The terminal audio parameter management apparatus according to claim 14, wherein the terminal audio parameter difference point combination comprises at least one of a terminal noise output level, a frequency response curve, and an environmental sound pressure characteristic parameter, and the environmental audio parameter difference point combination comprises at least one of a terminal noise output level, a frequency response curve, and an environmental sound pressure characteristic parameter;
the adjustment module adjusts a terminal audio parameter in one or more of the following manners:
adjusting a voice activation detection threshold parameter in a noise suppression algorithm according to a noise output level of the terminal;
configuring a gain value, an upper cutoff frequency point, and a Q value quality factor of a parameter filter in a voice optimization algorithm or a multimedia sound effect post-processing algorithm according to the frequency response curve; and
adjusting an analog gain and a digital gain of an audio path according to the environmental sound pressure characteristic parameter.

16. The terminal audio parameter management apparatus according to claim 14, wherein the processing module acquires a derived audio waveform and an environmental reflection audio waveform according to the loudspeaker audio waveform in the following manners:
performing echo suppression on the loudspeaker audio waveform, and canceling an echo signal of the loudspeaker audio waveform to obtain the derived audio waveform; and performing environmental sound field data acquisition on the echo signal to obtain the environmental reflection audio waveform.

17. A terminal audio parameter management system, comprising a terminal, a transmitter and a receiver, the terminal being provided with the terminal audio parameter management apparatus according to any one of claims 9 to 16.
